Europäisches Patentamt

European Patent Office

Office européen des brevets

(11) Veröffentlichungsnummer: **0 330 149 B1**

(12) **EUROPÄISCHE PATENTSCHRIFT**

(45) Veröffentlichungstag der Patentschrift: **28.10.92**

(21) Anmeldenummer: **89103008.2**

(22) Anmeldetag: **21.02.89**

(51) Int. Cl.⁵: **B60T 8/24**, B60T 8/00

(54) **Verfahren und Vorrichtung zum Steuern einer Bremsanlage für Schwerfahrzeuge.**

(30) Priorität: **23.02.88 DE 3805589**

(43) Veröffentlichungstag der Anmeldung:
**30.08.89 Patentblatt 89/35**

(45) Bekanntmachung des Hinweises auf die
Patenterteilung:
**28.10.92 Patentblatt 92/44**

(84) Benannte Vertragsstaaten:
**DE ES FR GB IT**

(56) Entgegenhaltungen:
**EP-A- 0 189 082**
**EP-A- 0 246 790**
**WO-A-83/03230**

(73) Patentinhaber: **LUCAS INDUSTRIES public limited company**
**Great King Street**
**Birmingham, B19 2XF West Midlands(GB)**

(72) Erfinder: **Rath, Heinrich-Berhard**
**Sebastian-Kneipp-Strasse 73a**
**W-5414 Vallendar(DE)**

(74) Vertreter: **von Hellfeld, Axel, Dr. Dipl.-Phys. et al**
**Wuesthoff & Wuesthoff Patent- und Rechtsanwälte Schweigerstrasse 2**
**W-8000 München 90(DE)**

**Beschreibung**

Die Erfindung betrifft ein Verfahren und eine Vorrichtung zum Steuern einer Bremsanlage für ein Schwerfahrzeug.

Im Dokument EP-A-0 246 790 wird eine Bremsanlage beschrieben, wobei die Achslast gemessen wird und bei der Bremsregelung berücksichtigt wird.

Schwerfahrzeuge, insbesondere beladene Lastkraftwagen mit Anhängern, Busse etc. stellen bei mangelhaften Bremsanlagen eine erhebliche Gefahrenquelle dar. Diese Gefahrenquelle kann durch menschliche Unzulänglichkeiten, insbesondere durch Ermüdung des Fahres, erheblich vergrößert werden.

Der Erfindung liegt die Aufgabe zugrunde, ein Verfahren und eine Vorrichtung zum Steuern einer Bremsanlage für Schwerfahrzeuge zu schaffen, mit dem bzw. der durch technische oder durch menschliche Unzulänglichkeiten bedingten Gefahren bezüglich des Abbremsens des Fahrzeuges automatisch begegnet wird.

Das erfindungsgemäße Verfahren zur Lösung dieser Aufgabe ist im Patentanspruch 1 beschrieben, während der Anspruch 4 eine erfindungsgemäße Vorrichtung zur Lösung der gestellten Aufgabe enthält.

Vorteilhafte Ausgestaltungen der Erfindung sind in den Unteransprüchen beschrieben.

In einer bevorzugten Weiterbildung des erfindungsgemäßen Verfahrens ist vorgesehen, daß der maximal zulässige Bremsweg in Abhängigkeit von zumindest einer der den Fahrzeugzustand kennzeichnenden Größen, (insbesondere der Geschwindigkeit) eingestellt wird. Die Einstellung erfolgt nach Erfahrungswerten unter Berücksichtigung einer gewünschten Sicherheit.

In einer weiteren Ausgestaltung des erfindungsgemäßen Verfahrens wird für den gegebenen Zustand der Bremsen und des Fahrzeuges sowie den vorgegebenen maximal zulässigen Bremsweg eine zugehörige maximale Soll-Fahrzeuggeschwindigkeit ermittelt und dem Fahrer neben der momentanen Ist-Fahrzeuggeschwindigkeit angezeigt.

Es ist daneben auch möglich, dem Fahrer entsprechend dem Ergebnis des Vergleichs des maximal zulässigen Bremsweges mit dem zu erwartenden Ist-Bremsweg oder auch entsprechend dem Vergleich der Soll-Fahrzeuggeschwindigkeit mit der Ist-Fahrzeuggeschwindigkeit die Gefahr, daß die Bremskapazität nicht mehr für den momentanen Zustand des Fahrzeuges ausreicht, optisch und/oder akustisch anzuzeigen.

Um ein willentliches oder fahrlässiges Ignorieren des Warnsignals seitens des Fahrers zu umgehen, ist in einer Weiterbildung der Erfindung eine Einrichtung vorgesehen, die entsprechend dem vom Vergleichsergebnis abhängigen Signal oder bei Abweichungen der Ist- von der Soll-Geschwindigkeit über eine vorgegebene Toleranz hinaus zwangsweise eine Verringerung der Ist-Fahrzeuggeschwindigkeit herbeiführt, wobei diese Einrichtung willkürlich für jeweils vorgegebene Zeitspanne außer Kraft setzbar ist, insbesondere durch eine Betätigungselement und/oder bei kurzzeitigem Vollgas.

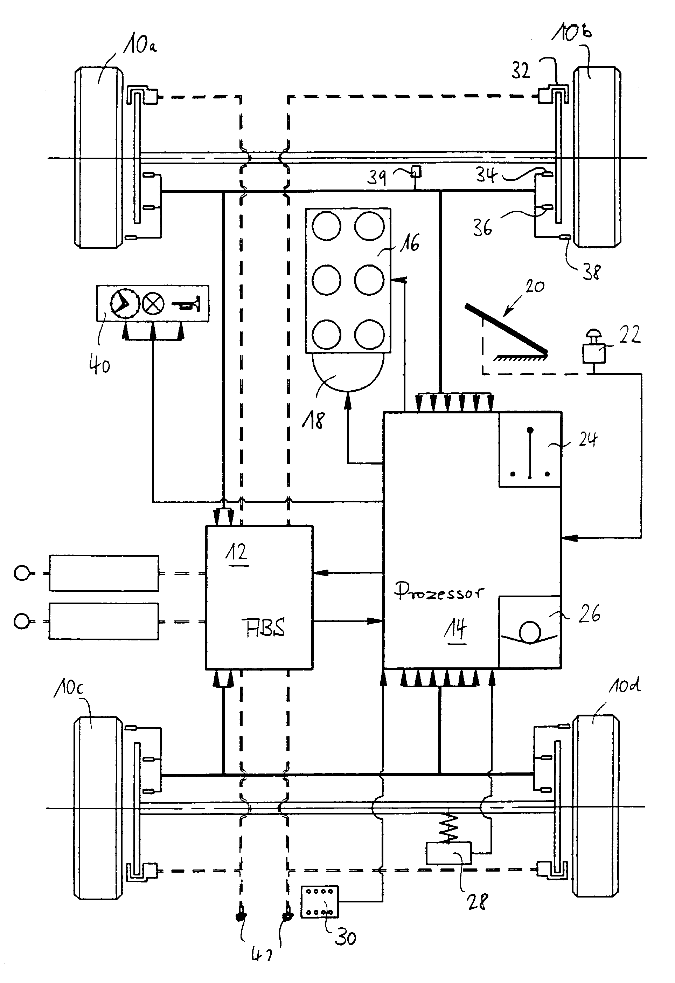

Nachfolgend wird ein Ausführungsbeispiel der Erfindung anhand der Zeichnung näher erläutert.

Die Figur zeigt schematisch eine Vorrichtung zum Steuern einer LKW-Bremsanlage.

Alle vier Räder 10a, 10b, 10c und 10d des Lastkraftwagens werden in bekannter Weise mittels einer ABS-Anlage 12 blockiergeschützt gebremst. Die ABS-Anlage und ihre Steuerung 12 sind herkömmlicher Art und dem Fachmann bekannt, so daß hier auf eine Beschreibung verzichtet werden kann.

Die Bremsanlage wird mittels eines Prozessors 14 gesteuert. In der Figur sind die Informations- und Befehlswege zum Prozessor und vom Prozessor zu den einzelnen Baugruppen mit Pfeilen angedeutet. Motor, Getriebe und Bremspedal sind mit dem Bezugzeichen 16, 18 bzw. 20 versehen. Das vom Fahrer mit dem Fuß betätigte Bremspedal ist mit einem Druckluftspeicher gekoppelt, um die Bremskraft zu verstärken. Der Druck im Druckluftspeicher wird mittels eines Druckluftsensors 22 ermittelt und ein entsprechendes Meßsignal wird in den Prozessor 14 eingegeben.

Ein Neigungssensor 24 stellt die Neigung der horizontalen Längsachse des LKW fest und erzeugt ein entsprechendes Signal, welches ebenfalls in den Prozessor 14 eingegeben wird.

Ein Querbeschleunigungssensor 26 stellt die Querbeschleunigung des LKW fest, also ob der LKW eine Kurve fährt. Bekanntlich reduziert sich der Bremskraftbeiwert in Abhängigkeit von der Querbeschleunigung.

Weiterhin ist ein Achslastsensor 28 an den Achsen des Fahrzeuges (in der Figur nur einer gezeigt) vorgesehen, um den Beladungszustand des LKW zu ermitteln. Statt der Achslastsensoren an den Achsen des Fahrzeuges können auch Radlastsensoren an den einzelnen Rädern vorgesehen sein. Dies hat den Vorteil, daß durch einen Vergleich der Radlasten auf der linken Seite des Fahrzeuges mit den Radlasten auf der rechten Seite des Fahrzeuges festgestellt werden kann ob, zum Beispiel in einer Kurve, eine Kippgefahr für das Fahrzeug besteht. Sobald die Radlasten auf einer Seite des Fahrzeuges geringer sind als ein vorgegebener Minimalwert, besteht Kippgefahr und dies kann dem Fahrer angezeigt werden. Neben der Anzeige kann auch eine Zwangsbremsung eingeleitet werden.

Ein Anhängersensor 30 stellt fest, ob der LKW einen Anhänger zieht oder nicht. Der Anhänger ist über Anschlüsse 42 mit dem LKW gekoppelt. Auch der Anhänger ist mit Achslastsensoren (nicht gezeigt) sowie ggf. mit den übrigen, hier im Zusammenhang mit dem LKW beschriebenen Sensoren ausgestattet.

Gemäß der Zeichnung sind alle Räder 10a, b, c und d jeweils mit einer Bremse 32 versehen. Weiterhin ist an jedem Rad ein Bremsverschleißsensor 34, ein Bremstemperatursensor 36 und ein Reifendrucksensor 38 angeordnet. Mittels eines Geschwindigkeitssensors 39 wird die Fahrzeuggeschwindigkeit ermittelt. Die Meßsignale aller Sensoren werden in den Prozessor 14 eingegeben.

Mittels einer Anzeigeeinrichtung 40 kann dem Fahrer des LKW eine Information darüber gegeben werden, ob bei dem momentan vorliegenden Fahrzeugzustand eine sichere Bremsung möglich ist oder nicht.

Die in der Figur gezeigte Bremsanlage arbeitet wie folgt.

Alle genannten Sensoren sind als solche dem Fahrzeug- und insbesondere dem Bremsenfachmann bekannt, so daß auf ihre Erläuterung hier verzichtet werden kann.

Die Sensoren 22, 24, 26, 28, 30, 34, 36, 38, 39 geben gemäß einer vorgegebenen Taktrate ihre Meßsignale an den Prozessor 14 ab. Beispielsweise kann jede Millisekunde ein vollständiger Satz von Meßdaten in den Prozessor 14 eingegeben und dort verarbeitet werden.

Wer für einen gegebenen Fahrzeugzustand unter Voraussetzung einer üblichen Reaktionsschnelligkeit des Fahrers und einer üblichen Bremsbetätigung zu erwartende Bremsweg $X_{ist}$ hängt im wesentlichen von folgenden Parametern ab:
- Geschwindigkeit V des LKW,
- Fahrbahnneigung N,
- Beladungszustand (Achslast) A,
- Anhängerbetrieb $A_B$ (ja/nein),
- Querbeschleunigung Q des LKW,
- Temperatur T der Bremsen,
- Verschleiß S der Bremsen,
- Zustand einer Bremskraftquelle (Druckluftspeicher) P und
- Druck in den Reifen $P_R$.

Von den vorstehend genannten Bestimmungsgrößen beziehen sich die ersten fünf auf den Zustand des Fahrzeuges, während die vier letztgenannten Parameter die Bremsanlage betreffen.

Aus den mittels der Sensoren gemessenen Daten soll nun errechnet werden, ob in der gegebenen Fahrsituation eine sichere Bremsung des LKW möglich ist oder nicht. Dem Fahrer soll permanent angezeigt werden, ob der momentan zu erwartende Bremsweg einen vorgegebenen Bremsweg $X_{soll}$ überschreitet oder nicht.

Der für den Vergleich vorzugebende Bremsweg $X_{soll}$ wird von vornherein im Prozessor 14 abgespeichert. Er wird selbst als Funktion der mittels des Geschwindigkeitssensors 39 jeweils gemessenen Fahrzeuggeschwindigkeit verändert, da bei hohen Geschwindigkeiten ein längerer Bremsweg in Kauf genommen werden muß als bei geringen Geschwindigkeiten. Der vorzugebende, maximal zulässige Bremsweg $X_{soll}$ kann beispielsweise in Metern der Fahrzeuggeschwindigkeit in km/h oder einem Bruchteil derselben entsprechen.

Aus den laufend mit hoher Taktrate in den Prozessor 14 eingegebenen Sensor-Meßsignalen wird jeweils ein zu erwartender Ist-Bremsweg $X_{ist}$ errechnet. Übersteigt der errechnete Ist-Bremsweg $X_{ist}$ den vorgegebenen (geschwindigkeitsabhängigen) maximal zulässigen Bremsweg $X_{soll}$, so wird entweder dem Fahrer ein nicht zu überhörendes und/oder zu übersehendes Warnsignal gegeben oder es wird sogar zwangsweise eine Reduzierung der Fahrzeuggeschwindigkeit oder sogar eine Zwangsbremsung eingeleitet, was unten näher beschrieben werden wird.

Für die Ermittlung des zu erwartenden Ist-Bremsweges $X_{ist}$ bestehen verschiedene Möglichkeiten.

Der zu erwartende Ist-Bremsweg $X_{ist}$ ist eine Funktion der Werte aller obengenannten Parameter:

$$X_{ist} = f (V, N, A, A_B, Q, T, S, P, P_R)$$

Abgesehen vom "Anhängerbetrieb", für den es nur die Entscheidung "ja oder nein" gibt, kann jeder der übrigen acht Parameter unabhängig von den anderen Parametern theoretisch beliebig viele Werte annehmen. Der Prozessor 14 müßte dann so programmiert werden, daß er für jeden beliebigen Werte-Satz aller acht Parameter den zugehörigen Ist-Bremsweg $X_{ist}$ errechnet. Hierfür müßten im Prozessor die funktionalen Abhängigkeiten des Ist-Bremsweges niedergelegt werden, was sehr aufwendige theoretische und empirische Vorarbeiten erforderlich machen würde.

Eine einfachere und trotzdem hinreichend sichere Ermittlung des Ist-Bremsweges $X_{ist}$ ist derart möglich, daß alle Parameter in einzelne Meß-Intervalle unterteilt werden, zum Beispiel in fünf Intervalle. Die Zahl der Intervalle kann für die einzelnen Parameter unterschiedlich gewählt werden, beispielsweise kann die Anzahl der Intervalle für diejenigen Parameter, die nicht linear in den Bremsweg eingehen, sondern mit höherer Potenz, wie z.B. die Geschwindigkeit, größer gewählt werden als für diejenigen Parameter, deren Werte sich mit einer geringeren Potenz im Ist-Bremsweg niederschlagen.

Mit derart in eine endliche Anzahl von Intervallen unterteilten Meß-Bereichen bezüglich der einzelnen Parameter reduziert sich der Speicher- und Rechenbedarf im Prozessor 14 erheblich. Es genügt, jeder möglichen Kombination von Meßwert-Intervallen aller Parameter jeweils einen Ist-Bremsweg zuzuordnen. Werden beispielsweise für alle acht Parameter jeweils fünf Meß-Intervalle festgelegt, so ergeben sich etwa 390 000 mögliche Intervall-Kombinationen, denen jeweils ein Ist-Bremsweg zugeordnet werden muß. Auch wenn diese Zuordnung nicht in allen Fällen empirisch durchgeführt werden muß, sondern durch Rechnungen vorab mit hinreichender Genauigkeit vorgenommen werden kann, ist zwar der Speicher- und Rechenaufwand erheblich, aber durchführbar.

Eine Vereinfachung der Ermittlung des Ist-Bremsweges ist wie folgt möglich.

Es wird für einen Mittelwert-Satz von Parameterwerten ein einziger zugehöriger Ist-Bremsweg $X_{ist}$ ermittelt. Das heißt, es werden bezüglich der obengenannten acht Parameter, welche kontinuierlich variieren können, zunächst typische "normale" Mittelwerte vorgegeben; es wird also z.B. die Geschwindigkeit auf 80 km/h, die Fahrbahnneigung auf 0°, der Beladungszustand auf einen typischen Wert, die Querbeschleunigung auf 0 km/s², die Bremstemperatur auf 30°C etc. gesetzt. In Abhängigkeit von diesem Mittelwert-Satz von insgesamt acht Werten wird dann der bei normaler Reaktionszeit des Fahrers und normaler Bremskraft zu erwartende Ist-Bremsweg ermittelt. Dies ist in einfacher Weise empirisch möglich.

Sodann wird für jeden einzelnen der obengenannten Parameter experimentell und/oder theoretisch ermittelt, in welcher Weise sich seine Änderung auf den Ist-Bremsweg auswirkt, d.h. es wird die Funktion

$$X_{ist} = f(Parameter) \times X_{ist}$$

ermittelt. Die vorstehend definierte Funktion f (Parameter) beschreibt also, wie sich der zu erwartende Ist-Bremsweg ändert, wenn nur dieser Parameter geändert wird, während die anderen Parameter die oben genannten "Normal"-Werte beibehalten. Die Änderung des gerade ausgewählten Parameters bezieht sich dann auf dessen "Normal-Wert" im obengenannten Mittelwert-Satz. Das heißt, das Argument "Parameter" in der Funktion f-(Parameter) ist die Differenz zwischen dem "Normalwert" (s.o.) und dem aktuellen Wert dieser Größe.

Die Funktion f wird für alle Parameter ermittelt und im Prozessor 14 abgelegt. Für die Parametergeschwindigkeit, Fahrbahnneigung, Beladungszustand und Querbeschleunigung ergibt sich die funktionale Abhängigkeit des Ist-Bremsweges aufgrund elementarer physikalischer Zusammenhänge und kann mit guter Genauigkeit theoretisch vorgegeben werden. Die Auswirkung der Querbeschleunigung des Fahrzeuges in einer Kurve auf den Bremsweg sind empirisch untersucht worden (Automobiltechnische Zeitschrift, 1969, S. 181 bis 189). Je größer die Querbeschleunigung des Fahrzeuges ist, umso geringer ist der zu erwartende Bremsweg. Auch hierfür kann eine funktionale Abhängigkeit vorgegeben werden.

Somit ergibt sich der Ist-Bremsweg wie folgt:

$$X_{ist} = f(V) \times f(N) \times f(A) ... f(P_R) \times X_{ist}$$

Es versteht sich, daß in der vorstehenden Formel die einzelnen Funktionen "f" für jeden Parameter in der Regel unterschiedlich sind. Die Funktion f(V) ist bekanntlich

$$f(V) = a \times V^2.$$

Die Proportionalitätskonstante a ist empirisch ermittelbar und hängt insbesondere von der Masse des Fahrzeuges ab.

Für die sich auf den Zustand der Bremse beziehenden Parameter, insbesondere die Bremstemperatur und den Belagverschleiß können Maximalwerte vorgegeben werden, bei deren Überschreiten die Bremsfähigkeit des Fahrzeuges überhaupt gefährdet ist. Die Funktion steigt dann sprunghaft an und ergibt z.B. den Ist-Bremswert "unendlich".

Im Prozessor werden die einzelnen Funktionen f(Parameter) programmiert abgelegt und es wird für jeden gegebenen Fahrzeugzustand mit der vorgegebenen Taktfrequenz jeweils der Ist-Bremsweg $X_{ist}$ ermittelt.

Überschreitet der ermittelte Ist-Bremsweg $X_{ist}$ den vorgegebenen Soll-Bremsweg $X_{soll}$, so wird dem Fahrer ein akustisches und/oder optisches Alarmsignal mittels der Anzeigeeinrichtung 40 gegeben.

Es ist auch möglich, zu jedem Ist-Bremsweg die zugehörige Fahrzeuggeschwindigkeit V zu berechnen, bei welcher der Ist-Bremsweg dem Soll-Bremsweg gleich wäre. Beide Geschwindigkeiten können dem Fahrer auf der Anzeigeeinrichtung 40 gleichzeitig angezeigt werden, beispielsweise die "normale", mittels des Tachometers gemessene momentane Fahrzeuggeschwindigkeit mit einem weißen Zeiger und die aufgrund des momentan berechneten Ist-Bremsweges maximal mögliche Geschwindigkeit mit einem roten Zeiger (bei digitaler oder Balken-Darstellung entsprechend mit farbigem Display).

Reagiert der Fahrer auf das eine überhöhte Geschwindigkeit anzeigende Warnsignal nicht, so wird die Geschwindigkeit automatisch im erforderlichen Maße zwangsweise herabgesetzt. Dies kann dadurch geschehen, daß das Gaspedal zwangsweise im Sinne einer Leistungsverringerung bewegt und/oder eine Motorbremse eingesetzt wird. Die Geschwindigkeit kann auch durch automatisches Zurückschalten des Getriebes gesenkt werden. Bei extrem unsicheren Fahrzeugzuständen, insbesondere dann, wenn die Bremstemperatur einen vorgegebenen Höchstwert überschreitet und auch der Belag-Verschleißsensor anzeigt, daß die Beläge kein sicheres Bremsen mehr ermöglichen, wird eine Zwangsbremsung des Fahrzeuges eingeleitet.

Auch dann, wenn der Querbeschleunigungssensor 26 anzeigt, daß sich die Querbeschleunigung einem vorgegebenen kritischen Wert nähert, welcher ein Kippen des Fahrzeuges möglich werden läßt, wird zunächst der Fahrer wie beschrieben gewarnt und/oder das Fahrzeug zwangsweise gebremst.

Alle erfindungsgemäß vorgesehenen Zwangsmaßnahmen können vom Fahrer willkürlich überbrückt werden, was aber in einem Speicher des Prozessors 14 unauslöschbar registriert wird. Der Fahrer muß in bestimmten Situationen die Möglichkeit haben, die ansonsten zwangsweise eingeleiteten Geschwindigkeitsreduzierungen zu überbrükken, beispielsweise in Fahrsituationen, in denen nur durch eine Fahrzeugbeschleunigung eine Gefahr abgewendet werden kann, beispielsweise auf einer Überholspur.

Weiterhin können die mit den einzelnen Temperatursensoren 36 ermittelten Bremstemperaturen der einzelnen Radbremsen miteinander verglichen werden. Auch kann der zeitliche Verlauf des Temperaturanstieges der Bremsssscheiben ermittelt und im Rechner mit vorgegebenen "Normal"-Verläufen verglichen werden, um defekte Bremsen zu erkennen. Ergibt die Temperaturmessung beispielsweise, daß einzelne Bremsen wesentlich heißer laufen als andere Bremsen des Fahrzeuges, so kann hieraus auf einen Defekt geschlossen werden, wie einen festsitzenden Kolben, ein defektes Lager etc.

**Patentansprüche**

1. Verfahren zum Steuern einer Bremsanlage für ein Schwerfahrzeug,
   dadurch **gekennzeichnet,** daß folgende, den Fahrzeugzustand kennzeichnende Größen gemessen werden:
   - die Geschwindigkeit (V) des Fahrzeuges,
   - die Neigung (N) der Fahrbahn,
   - die Achslast (A),
   - die Querbeschleunigung (Q),
     sowie die folgenden, den Zustand der Bremse kennzeichnenden Größen:
   - die Temperatur (T) der Bremsen,
   - der Verschleißzustand (S) der Bremsen,
   - der Zustand einer Bremskraftquelle, wie der Druck (P) in einem Druckluftspeicher,

   - der Reifendruck ($P_R$),
   daß die so gemessenen Größen gemäß einer vorgegebenen Taktrate in einen Prozessor (14) eingegeben und dort derart verarbeitet werden, daß für den gegebenen Brems- und Fahrzeugzustand unter Vorgabe eines maximal zulässigen Bremsweges ($X_{soll}$) ermittelt wird, ob bei einer möglichen Bremsung der vorgegebene, maximal zulässige Bremsweg ($X_{soll}$) überschritten wird und daß dem Fahrer eine mögliche Bremswegüberschreitung angezeigt wird.

2. Verfahren nach Anspruch 1,
   dadurch **gekennzeichnet,**
   daß der maximal zulässige Bremsweg in Abhängigkeit von zumindest einer der den Fahrzeugzustand kennzeichnenden Größen eingestellt wird.

3. Verfahren nach einem der Ansprüche 1 oder 2,
   dadurch **gekennzeichnet,**
   daß für den gegebenen Brems- und Fahrzeugzustand sowie den vorgegebenen maximalen Bremsweg eine maximale Soll-Fahrzeuggeschwindigkeit ermittelt und dem Fahrer neben der Ist-Fahrzeuggeschwindigkeit angezeigt wird.

4. Vorrichtung zum Steuern einer Bremsanlage für ein Schwerfahrzeug,
   **gekennzeichnet** durch
   folgende Meßeinrichtungen:
   - einen Sensor (39) für die Fahrzeuggeschwindigkeit,
   - einen Sensor (24) für die Neigung der Fahrbahn,
   - einen Sensor (28) für die Achslast,
   - einen Sensor (26) für die Querbeschleunigung des Fahrzeuges,
   - einen Sensor (36) für die Temperatur der Bremsen (32),
   - einen Sensor (34) für den Verschleißzustand der Bremsen,
   - einen Sensor (22) für den Zustand einer Bremskraftquelle, und
   - einen Sensor (38) für den Reifendruck, sowie
   - einen Prozessor (14), der Meßsignale der Sensoren (22, 24, 26, 28, 34, 36, 39) empfängt, aus ihnen einen zu erwartenden Bremsweg ($X_{ist}$) errechnet und mit einem vorgegebenen, maximal zulässigen Bremsweg ($X_{soll}$) vergleicht und ein vom Vergleichsergebnis abhängiges Signal abgibt.

5. Vorrichtung nach Anspruch 4,
   dadurch **gekennzeichnet,**

daß mittels des Prozessors (14) aus den Meß-signalen unter Berücksichtigung des vorgege-benen, maximal zulässigen Bremsweges ($X_{soll}$) eine Fahrzeug-Sollgeschwindigkeit ermittelt wird und daß auf einem Fahrgeschwindigkeitsanzeiger (40) sowohl die Soll- als auch die Ist-Geschwindigkeit angezeigbar sind.

6. Vorrichtung nach einem der Ansprüche 4 oder 5,
   dadurch **gekennzeichnet,**
   daß eine Einrichtung (40) vorgesehen ist, die entsprechend dem in Abhängigkeit vom Ver-gleichsergebnis abgegebenen Signal ein opti-sches und/oder akustisches Warnsignal abgibt.

7. Vorrichtung nach einem der Ansprüche 5 oder 6,
   dadurch **gekennzeichnet,**
   daß eine Einrichtung (14) vorgesehen ist, die entsprechend dem vom Vergleichsergebnis abhängigen Signal oder bei Abweichungen der Ist- von der Soll-Geschwindigkeit über eine vorgegebene Toleranz hinaus zwangsweise eine Verringerung der Ist-Fahrzeuggeschwindigkeit herbeiführt, wobei diese Einrichtung willkürlich für jeweils vorgegebene Zeitspannen außer Kraft setzbar ist, insbesondere durch eine Betätigungselement und/oder bei kurzzeitigem Vollgas.

## Claims

1. A method of controlling a brake system in a heavy-duty vehicle, **characterized** in that the following magnitudes are measured which are characteristic of the state of the vehicle:
   - the velocity (V) of the vehicle,
   - the inclination (N) of the roadway,
   - the axle load (A),
   - the transverse acceleration (Q),
     as well as the following magnitudes which are characteristic of the state of the brake:
   - the temperature (T) of the brakes,
   - the condition of wear (S) of the brakes,
   - the condition of a brake pressure source, such as the pressure (P) in a compressed air reservoir,
   - the tire pressure ($P_R$),
   that the magnitudes thus measured are entered into a processor (14) at a given clock rate and processed therein such as to determine, for the resulting brake and vehicle conditions, in consideration of a given maximum permissible stopping distance ($X_{soll}$), whether or not the predetermined maximum permis-sible stopping distance ($X_{soll}$) will be exceeded

if the brakes should be applied, and that the driver is advised of a possible surpassing of the stopping distance.

2. The method as claimed in claim 1, characterized in that the maximum permissible stopping distance is adjusted in response to at least one of the magnitudes characterizing the state of the vehicle.

3. The method as claimed in claim 1 or 2, characterized in that a maximum rated vehicle speed is determined for the given brake and vehicle conditions and the predetermined maximum stopping distance and is indicated to the driver, besides the actual vehicle speed.

4. An apparatus for controlling a brake system in a heavy-duty vehicle, **characterized** by the following measuring means:
   - a sensor (39) for the vehicle speed,
   - a sensor (24) for the roadway inclination,
   - a sensor (28) for the axle load,
   - a sensor (26) for the transverse vehicle acceleration,
   - a sensor (36) for the temperature of the brakes (32),
   - a sensor (34) for the state of wear of the brakes,
   - a sensor (38) for the tire pressure, as well as
   - a processor (14) which receives measuring signals from the sensors (22,24,26,28,34,36,39), calculates a stop-ping distance ($X_{ist}$) to be expected on the basis thereof, and compares it with a predetermined maximum permissible stopping distance ($X_{soll}$), and emits a sig-nal in response to the result of the comparison.

5. The apparatus as claimed in claim 4, characterized in that the processor (14) determines a rated vehicle speed from the measuring signals in consideration of a given maximum per-missible stopping distance ($X_{soll}$), and that a travelling speed indicator (40) is adapted to display both the rated and the actual velocities.

6. The apparatus as claimed in claim 4 or 5, characterized in that a means (40) is provided which emits an optical and/or acoustical alarm signal in correspondence with the signal emitted in response to the result of the comparison.

7. The apparatus as claimed in claim 5 or 6, characterized in that a means (14) is provided which positively causes the actual travelling speed of the vehicle to be reduced in correspondence with the signal which is responsive to the result of the comparison or does so in case of deviations beyond a predetermined tolerance of the actual speed from the rated speed, said means being adapted to be rendered inoperative voluntarily for given periods of time each, especially by an actuator member and/or by briefly shoving the throttle full open.

**Revendications**

1. Procédé de commande d'un installation de freinage de véhicule lourd,
   **caractérisé** en ce que sont mesurées les valeurs suivantes caractérisant l'état du véhicule :
   - la vitesse (V) du véhicule,
   - l'inclinaison (N) de la voie,
   - la charge par essieu (A),
   - l'accélération transversale (Q),
        ainsi que les valeurs suivantes caractérisant l'état du frein :
   - la température (T) des freins,
   - l'état d'usure (S) des freins,
   - l'état d'une source de force de freinage, comme la pression (P) dans le réservoir d'air comprimé,
   - la pression des pneumatiques ($P_R$),
   en ce que les valeurs ainsi mesurées sont introduites à une fréquence prédéterminée dans un processeur (14) et y sont traitées d'une manière telle qu'il est déterminé, au vu de l'état donné de frein et de véhicule, pour une distance prédéterminée de freinage maximale admissible ($X_{consi}$), si la distance de freinage maximale admissible ($X_{consi}$) en cas de freinage éventuel est dépassée et qu'un dépassement possible de la distance de freinage est affiché au conducteur.

2. Procédé selon la revendication 1,
   **caractérisé**
   en ce que la distance de freinage maximale admissible est réglée en fonction d'au moins une des valeurs caractérisantes de l'état du véhicule.

3. Procédé selon l'une des revendications 1 ou 2,
   **caractérisé**
   en ce qu'une vitesse maximale de consigne du véhicule est déterminée pour l'état donné des freins et du véhicule ainsi que pour la distance maximale de freinage prédéterminée et qu'elle est affichée au conducteur à côté de la vitesse réelle du véhicule.

4. Dispositif de commande d'une installation de freinage pour un véhicule lourd,
   **caractérisé**
   par les dispositifs de mesure suivants :
   - un capteur (39) de la vitesse de véhicule,
   - un capteur (24) de l'inclinaison de la voie,
   - un capteur (28) de la charge par essieu,
   - un capteur (26) de l'accélération transversale du véhicule,
   - un capteur (36) de la température des freins (32),
   - un capteur (34) de l'état d'usure des freins,
   - un capteur (22) de l'état d'une source de force de freinage, et
   - un capteur (38) de la pression de pneumatique,
        ainsi que par
   - un processeur (14) qui reçoit des signaux de mesure des capteurs (22, 24, 26, 28, 34, 36, 39), calcule à partir de ceux-ci une distance de freinage à prévoir ($X_{réel}$) et la compare à une distance de freinage maximale admissible prédéterminée ($X_{consi}$), et qui envoie un signal dépendant du résultat de la comparaison.

5. Dispositif selon la revendication 4,
   **caractérisé**
   en ce qu'une vitesse de consigne du véhicule est déterminée au moyen du processeur (14) à partir des signaux de mesure en prenant en compte la distance de freinage maximale admissible prédéterminée ($X_{consi}$) et que tant la vitesse de consigne que la vitesse réelle peuvent être affichées sur un indicateur de vitesse (40).

6. Dispositif selon l'une des revendications 4 ou 5,
   **caractérisé**
   en ce qu'il est prévu un appareil (40) qui émet un signal d'alarme optique et/ou acoustique correspondant au signal envoyé en fonction du résultat de la comparaison.

7. Dispositif selon l'une des revendications 5 ou 6,
   **caractérisé**
   en ce qu'il est prévu un appareil (14) qui provoque de façon forcée une réduction de la vitesse réelle du véhicule conformément au signal dépendant des résultats de la comparaison ou en cas d'écarts entre la vitesse réelle et la vitesse de consigne dépassant une tolérance prédéterminée, cet appareil pouvant être mis hors fonction de façon volontaire pour des intervalles de temps prédéterminés respectifs, en particulier au moyen d'un élément d'actionnement ou en cas d'une accélération maximale de courte période.